# EUROPEAN PATENT APPLICATION

(11) **EP 4 372 226 A1**
(43) Date of publication of application: **22.05.2024**
(21) Application number: 22315291.9
(22) Date of filing: 16.11.2022
(51) Int. Cl.: F03D 13/10, F03D 13/20, F03D 13/25

(54) **AN OFFSHORE ELECTRICITY PRODUCTION ASSEMBLY COMPRISING A WIND TURBINE AND A GRAVITY-BASED SUPPORT STRUCTURE**

(71) Applicant: TOTALENERGIES ONETECH, 92400 Courbevoie (FR)
(72) Inventor: Gentil, M. Frédéric, 92400 COURBEVOIE (FR)
(74) Representative: Lavoix

(57) **Abstract**

An offshore electricity production assembly comprising a gravity-based support structure (12), and a wind turbine (14) defining a vertical direction (V), the support structure comprising:
- a base (20) adapted for lying on a seabed (22);
- a lower part (24) comprising: a connection piece (50) defining a housing (52); a plurality of hollow legs (38) fixed to the base; a plurality of tensioning members (54);
- a hollow upper part (26) extending along the vertical direction, and including a connection portion (62) adapted for being received in the housing and fixed to the connection piece,
each of the lower part and the upper part comprising steel, and respectively and at least partly forming two blocks (44, 48) adapted for being lowered successively towards the seabed during installation, and the support structure having a height (H) along the vertical direction comprised between 95 and 135 meters.

## Description

The present invention deals with an offshore electricity production assembly comprising a support structure, and a wind turbine supported by the support structure and defining a vertical direction.

The invention also deals with a process for installing such an assembly.

In the field of offshore wind electricity, anchored floating support structures represent a well-known solution. However, they are expensive, particularly for large wind turbines.

Jacket structures lying on the seabed are complex. For a water depth above 80 meters, they also become very expensive.

Monopiles are recognized by the offshore wind industry as an economical bottom-fixed concept for serial installation of wind turbines, and are therefore preferred whenever possible. Their cost per installed MW can be significantly less than that of a jacket, for which supply chain and manufacturing process are completely different.

Monopiles have however their own limitations. First, the maximum diameter that can be efficiently obtained is currently around 10 to 11m. As a result, due to their relative slenderness, monopiles are limited to shallow areas, and are generally not competitive with jackets above 30-40m water depths, depending on available installation vessels, soil and local weather conditions. The largest/longest monopiles are also heavy and difficult to handle onshore and to transport to the offshore site, and finally challenging to install by either driving or drilling/grouting.

Gravity based structures may be adapted, in particular when the seabed cannot be drilled. They comprise a broad base, for example made of concrete. For a water depth above 80 meters, the base is very large and could be heavier than 15000 tons, so that no ship or floating structure is able to lift it. The upper part of such a support structure is usually made of steel and may also be difficult to install.

An aim of the invention is thus to provide an offshore electricity production assembly which is adapted for being installed in a water depth of more than 80 meters and is less complex and expensive than the existing solutions.

To this end, the invention proposes an assembly for producing offshore electricity comprising a gravity-based support structure, and a wind turbine supported by the support structure and defining a vertical direction, the support structure comprising:
- a base adapted for lying on a seabed and located around the vertical direction;
- a lower part comprising: a connection piece defining a housing; a plurality of hollow legs protruding downwards from the connection piece and inclined with respect to the vertical direction, each of the legs being fixed to the base; and a plurality of tensioning members, each of the tensioning members being connected to lower extremities of two of the legs; and
- a hollow upper part extending along the vertical direction, and having an upper extremity intended to be above sea level and to be mechanically connected to a mast of the wind turbine, the upper part including a connection portion adapted for being received in the housing and fixed to the connection piece,
each of the lower part and the upper part comprising at least 90wt% of steel, the lower part and the upper part respectively and at least partly forming two blocks adapted for being lowered successively towards the seabed during installation of the assembly, and the support structure having a height along the vertical direction comprised between 95 and 135 meters.

In other embodiments, the assembly comprises one or several of the following features, taken in isolation or any technically feasible combination:
- said housing and said connection portion are cylindrical;
- said housing defines an axis and said connection portion defines an axis both intended to be vertical; and said connection portion is received in the housing with clearance, said clearance allowing the axis of the housing and the axis of the connection portion to form a maximum levelling angle between themselves before the connection portion is fixed to the connection piece, said maximum levelling angle being comprised between 0.4° and 1.0°;
- the upper part comprises a support mast welded to the connection portion and intended to be fixed to the wind turbine; said connection portion defines an axis and said support mast defines an axis both intended to be vertical and coaxial; and the axis of the connection portion and the axis of the support mast define a levelling angle between themselves, said levelling angle being larger than 0.3° and smaller than 5°;
- the base comprises a plurality of pods adapted for lying on the seabed and distributed around the vertical direction, the pods being distinct from each other, and the legs being fixed to the pods;
- each of the pods comprises reinforced concrete;
- each of the pods comprises: a steel structure forming an envelope defining at least one interior volume; and a ballasting material in the interior volume;
- the steel structure comprises: horizontal radial beams connected to one of the legs an extending radially from said leg; and reinforcing braces, each of the reinforcing braces being fixed to said leg and to the radial beams respectively;
- the steel structure of the pods is part of the block formed by the lower part;
- the plurality of legs consists of three legs;
- each of the legs is frustoconical flaring towards the connecting portion;
- each of the two blocks has a mass smaller than 10000 tons; and
- the tensioning members comprise connecting tendons or connecting braces.

The invention also proposes a process for installing an assembly as described above in a predefined location, comprising the following steps:
- providing the base, the two blocks at least partly formed by the lower part and the upper part, and the wind turbine,
- installing at least part of the base on the seabed at the predefined location,
- moving the two blocks and the wind turbine to the predefined location, each of the two blocks and the wind turbine being towed by at least one ship, or being transported on board a floating vessel,
- lowering the block formed by the lower part,
- fixing each of the legs to the base,
- lowering the block formed by the upper part independently from the block formed by the lower part,
- introducing the connection portion into the housing, and fixing the connection portion to the connection piece, the upper extremity of the upper part being above sea level, and
- mechanically connecting the upper extremity of the upper part to a mast of the wind turbine.

The invention and its advantages will be better understood upon reading the following description, given solely by way of example and with reference to the appended drawings, in which:
- Figure 1 is a schematic perspective view of an assembly according to the invention,
- Figure 2 is a schematic side view of the support structure of the assembly shown in Figure 1, and
- Figure 3 is a schematic side view of a pod of the base of the support structure shown in Figures 1 and 2.

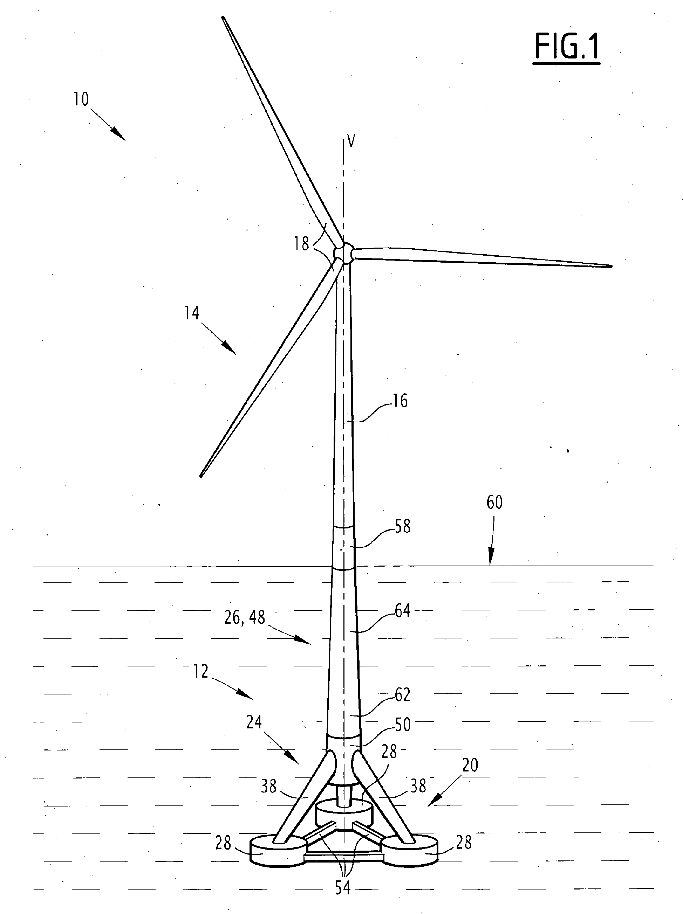

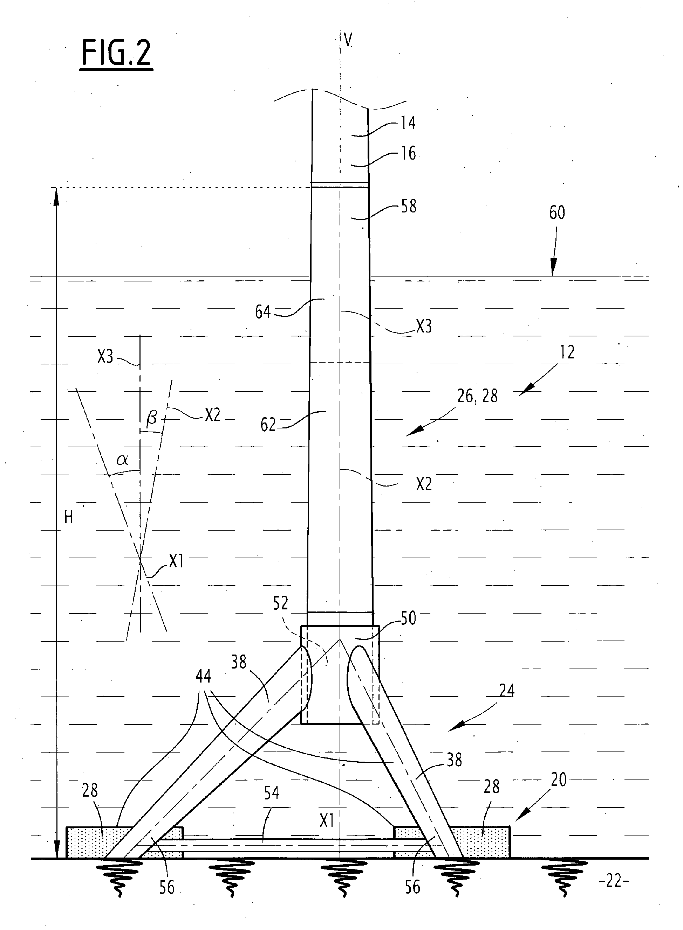

An assembly 10 according to the invention will now be described with reference to Figures 1 and 2. The assembly 10 is adapted for producing offshore electricity.

The assembly 10 comprises a gravity-based support structure 12, and a wind turbine 14 supported by the support structure and defining a vertical direction V.

The wind turbine 14 comprises a mast 16 fixed to the support structure 12, and blades 18 rotatably mounted on the mast.

The support structure 12 has a height H along the vertical direction V comprised between 95 and 135 meters.

The support structure 12 comprises a base 20 adapted for lying on a seabed 22 and located around the vertical direction V, a lower part 24 which in the example forms a tripod, and a hollow upper part 26 extending in the vertical direction V.

As variants (not shown), the lower part 24 may have another shape than a tripod.

Advantageously, the base 20 comprises a plurality of pods 28, three in the example, adapted for lying on the seabed 22 and distributed around the vertical direction V, the pods 28 being distinct from each other.

According to a variant (not shown), the base 20 does not have several pods, but is a continuous element, such as a disk.

The pods 28 are configured for being heavy and providing mechanical stability to the assembly 10.

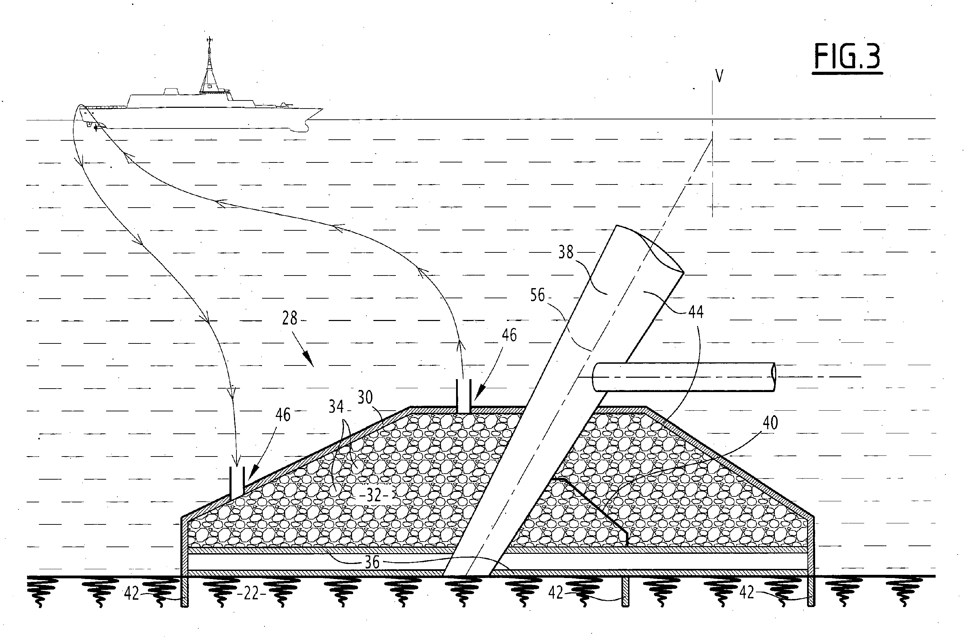

In the example, as shown in Figure 3, each of the pods 28 comprises a steel structure 30 forming an envelope defining at least one interior volume 32, and a ballasting material 34 in the interior volume. Such pods 28 are known in themselves as "spud cans".

As a variant (not shown), each of the pods 28 comprises reinforced concrete.

Advantageously, the steel structure 30 comprises horizontal radial beams 36 connected to a leg 38 of the lower part 24 and an extending radially from said leg, and reinforcing braces 40, each of the reinforcing braces being fixed to said leg and to the radial beams respectively. Optionally, the steel structure 30 comprises one or several spades 42 extending in the seabed 22.

In the example, the steel structure 30 of the pods 28 and the lower part 24 form a block 44 adapted for being lowered by a crane (not shown) during the installation of the assembly 10, whereas the ballasting material 34 is added once said block 44 is installed.

The envelope advantageously defines one or several openings 46 adapted for injecting the ballasting material 34 into the interior volume 32 from a ship, once the block 44 has been installed on the seabed 22.

As a variant (not shown), the block 44 is formed by the lower part 24 only.

For example, the ballasting material 34 comprises cement or iron ore, particularly magnetic iron ore.

Each of the lower part 24 and the upper part 26 comprises at least 90wt%, preferably 95wt% of steel, or is even made of steel.

The lower part 24, as already said, and the upper part 26 respectively at least partly form two blocks 44, 48 adapted for being lowered successively towards the seabed 22 during installation of the assembly 10.

Each of the two blocks 44, 48 has a mass for example smaller than 10000 tons, and larger than 2500 tons, preferably larger than 5000 tons, and are adapted for being lifted by a ship or a floating platform (not shown) equipped with a crane (not shown).

The lower part 24 comprises a connection piece 50 defining a housing 52, said legs 38 and a plurality of tensioning members 54, each of the tensioning members being connected to lower extremities 56 of two of the legs.

The legs 38 are hollow and are advantageously made of steel. The legs 38 protrude downwards from the connection piece 50 and are inclined with respect to the vertical direction V, each of the legs being fixed to the base 20, in the example respectively to the pods 28.

As there are three legs 38 in the example, the lower part 24 and the base 20 have a tripod shape. In variants.(not shown), there may be more than three legs, for example four legs.

Advantageously, each of the legs 38 is frustoconical flaring towards the connecting piece 50.

The tensioning members 54 may comprise connecting tendons or connecting braces.

The upper part 26 has an upper extremity 58 intended to be above sea level 60 and to be mechanically connected to the mast 16 of the wind turbine 14. The upper part 26 includes a connection portion 62 adapted for being received in the housing 52 and fixed to the connection piece 50. The upper part 26 for example comprises a support mast 64 welded to the connection portion 62 and intended to be fixed to the wind turbine 14.

The housing 52 and the connection portion 62 are advantageously cylindrical, so as to facilitate the connection and to allow customizing the height H of the support structure 12 by modifying the length of the connection portion 62 in the vertical direction V.

The housing 52 defines an axis X1 and the connection portion 62 defines an axis X2 (Figure 2) both intended to be vertical.

The connection portion 62 is advantageously received in the housing 52 with clearance, said clearance allowing the axis X1 and the axis X2 to form a maximum levelling angle α (symbolized in Figure 2) between themselves before the connection portion 62 is fixed to the connection piece 50.

The maximum levelling angle α is for example comprised between 0.4° and 1.0°. The levelling angle α allows the axis X2 being vertical even if the axis X1 is not exactly vertical, which may happen if the lower part 24 and the base 20 move from an initial position due to a relatively soft seabed 22.

The support mast 64 defines an axis X3 intended to be vertical and coaxial with the axis X2.

The axis X2 and the axis X3 advantageously define a levelling angle β (symbolized in Figure 2) between themselves. The levelling angle β is for example larger than 0.3° and smaller than 5° in order to cope with the axis X1 not being exactly vertical.

A process for installing the assembly 10 in a predefined location will now be described.

First, the base, the two blocks 44, 48 at least partly formed by the lower part 24 and the upper part 26, and the wind turbine 14 are provided.

At least part of the base 20 is installed on the seabed 22 at the predefined location. In the example, this is performed by lowering the block 44 formed by the lower part 24 and the steel structure 30 of the pods 28. As a variant, if the base 20 is independent from the block 44, the base may be installed before the block 44 is lowered.

The two blocks 44, 48 and the wind turbine 14 are moved to the predefined location, each of the two blocks 44, 48 and the wind turbine 14 being towed by at least one ship, or being transported on board a floating vessel (not shown).

The block 44 formed by the lower part 24 is lowered using a crane.

Each of the legs 38 is fixed to the base 20. In the example, this is performed when building the block 44. In the example, the ballasting material 34 is introduced in the interior volume 32, thus completing the installation of the base 20.

The process advantageously includes waiting for stabilization of the base 20 and the lower part 24 with respect to the vertical direction V.

The block 48 formed by the upper part 26 is lowered independently from the block 44.

The connection portion 62 is introduced into the housing 52, and fixed to the connection piece 50, the upper extremity 58 of the upper part 26 being above the sea level 60. Advantageously, the levelling angles α and/or β allow compensating for the axis X1 not being exactly vertical.

The upper extremity 68 of the upper part 26 is mechanically connected to the mast 16 of the wind turbine 14.

Thanks to the above features, in particular the support structure 12 having a lower part 24 and an upper part 26 at least partly forming two separate blocks 44, 48, the support structure 12 is easily installed on the seabed 22. The lower part 24 and the upper part 26 are relatively simple to manufacture and to carry. The gravity-based support structure 12 provides stability. The assembly 10 is adapted for being installed in a water depth of more than 80 meters and is less complex and expensive than the existing solutions.

## Claims

1. An offshore electricity production assembly (10) comprising a gravity-based support structure (12), and a wind turbine (14) supported by the support structure (12) and defining a vertical direction (V), the support structure (12) comprising:
- a base (20) adapted for lying on a seabed (22) and located around the vertical direction (V);
- a lower part (24) comprising: a connection piece (50) defining a housing (52); a plurality of hollow legs (38) protruding downwards from the connection piece (50) and inclined with respect to the vertical direction (V), each of the legs (38) being fixed to the base (20); and a plurality of tensioning members (54), each of the tensioning members (54) being connected to lower extremities (56) of two of the legs (38); and
- a hollow upper part (26) extending along the vertical direction (V), and having an upper extremity (58) intended to be above sea level (60) and to be mechanically connected to a mast (16) of the wind turbine (14), the upper part (26) including a connection portion (62) adapted for being received in the housing (52) and fixed to the connection piece (50),
each of the lower part (24) and the upper part (26) comprising at least 90wt% of steel, the lower part (24) and the upper part (26) respectively and at least partly forming two blocks (44, 48) adapted for being lowered successively towards the seabed (22) during installation of the assembly (10), and the support structure (12) having a height (H) along the vertical direction (V) comprised between 95 and 135 meters.

2. The assembly (10) according to claim 1, wherein said housing (52) and said connection portion (62) are cylindrical.

3. The assembly (10) according to claim 1 or 2, wherein:
- said housing (52) defines an axis (X1) and said connection portion (62) defines an axis (X2) both intended to be vertical, and
- said connection portion (62) is received in the housing (52) with clearance, said clearance allowing the axis (X1) of the housing (52) and the axis (X2) of the connection portion (62) to form a maximum levelling angle (α) between themselves before the connection portion (62) is fixed to the connection piece (50), said maximum levelling angle (α) being comprised between 0.4° and 1.0°.

4. The assembly (10) according to any one of claims 1 to 3, wherein:
- the upper part (26) comprises a support mast (64) welded to the connection portion (62) and intended to be fixed to the wind turbine (14),
- said connection portion (62) defines an axis (X2) and said support mast (64) defines an axis (X3) both intended to be vertical and coaxial, and
- the axis (X2) of the connection portion (62) and the axis (X3) of the support mast (64) define a levelling angle (β) between themselves, said levelling angle (β) being larger than 0.3° and smaller than 5°.

5. The assembly (10) according to any one of claims 1 to 4, wherein the base (20) comprises a plurality of pods (28) adapted for lying on the seabed (22) and distributed around the vertical direction (V), the pods (28) being distinct from each other, and the legs (38) being fixed to the pods (28).

6. The assembly (10) according to claim 5, wherein each of the pods (28) comprises reinforced concrete.

7. The assembly (10) according to claim 5, wherein each of the pods (28) comprises:
- a steel structure (30) forming an envelope defining at least one interior volume (32), and
- a ballasting material (34) in the interior volume (32).

8. The assembly (10) according to claim 7, wherein the steel structure (30) comprises:
- horizontal radial beams (36) connected to one of the legs (38) an extending radially from said leg, and
- reinforcing braces (40), each of the reinforcing braces (40) being fixed to said leg and to the radial beams (36) respectively.

9. The assembly (10) according to claim 7 or 8, wherein the steel structure (30) of the pods (28) is part of the block (44) formed by the lower part (24).

10. The assembly (10) according to any one of claim 1 to 9, wherein the plurality of legs (38) consists of three legs (38).

11. The assembly (10) according to any one of claim 1 to 10, wherein each of the legs (38) is frustoconical flaring towards the connecting portion.

12. The assembly (10) according to any one of claim 1 to 10, wherein each of the two blocks (44, 48) has a mass smaller than 10000 tons.

13. The assembly (10) according to any one of claim 1 to 12, wherein the tensioning members (54) comprise connecting tendons or connecting braces.

14. A process for installing an assembly (10) according to any one of claims 1 to 13 in a predefined location, comprising the following steps:
- providing the base (20), the two blocks (44, 48) at least partly formed by the lower part (24) and the upper part (26), and the wind turbine (14),
- installing at least part of the base (20) on the seabed (22) at the predefined location,
- moving the two blocks (44, 48) and the wind turbine (14) to the predefined location, each of the two blocks (44, 48) and the wind turbine (14) being towed by at least one ship, or being transported on board a floating vessel,
- lowering the block (44) formed by the lower part (24),
- fixing each of the legs (38) to the base (20),
- lowering the block (48) formed by the upper part (26) independently from the block (44) formed by the lower part (24),
- introducing the connection portion (62) into the housing (52), and fixing the connection portion (62) to the connection piece (50), the upper extremity (58) of the upper part (26) being above sea level (60), and
- mechanically connecting the upper extremity (58) of the upper part (26) to a mast (16) of the wind turbine (14).
